# EUROPÄISCHE PATENTSCHRIFT

(11) **EP 1 770 414 B1**
(45) Veröffentlichungstag und Bekanntmachung des Hinweises auf die Patenterteilung: **07.11.2012**
(21) Anmeldenummer: 06020136.5
(22) Anmeldetag: 26.09.2006
(51) Int. Cl.: G01V 8/20

(54) **Optoelektronische Anordnung**
Optoelectronic system
Agencement optoélectronique

(30) Priorität: 28.09.2005 DE 102005046359
(43) Veröffentlichungstag der Anmeldung: 04.04.2007
(73) Patentinhaber: SICK AG, 79183 Waldkirch (DE)
(72) Erfinder: Schmitz, Stephan, 79108 Freiburg (DE)
(74) Vertreter: Manitz, Finsterwald & Partner GbR

(56) Entgegenhaltungen:
- EP-A- 1 452 883
- EP-A2- 0 867 732
- DE-A1- 4 438 798
- DE-A1- 10 254 888
- US-A- 4 891 508

## Beschreibung

Die vorliegende Erfindung betrifft eine optoelektronische Anordnung mit einer Mehrzahl von Lichtsender- oder Lichtempfängermodulen, die mittels einer flexiblen Leiterkarte elektrisch miteinander verbunden und jeweils einem Tubus oder Linsenkörper zugeordnet sind. Weiterhin betrifft die Erfindung ein Lichtgitter mit einer Sende- und einer Empfangsleiste, welche jeweils als optoelektronische Anordnung der genannten Art ausgebildet sind.

Derartige Lichtgitter bzw. optoelektronische Anordnungen sind beispielsweise aus EP-A-0 867 732 bekannt. Sie werden zu vielfältigen Überwachungszwecken, insbesondere bei der Absicherung von Gefahrenbereichen oder der Überwachung von Türen eingesetzt, wobei sie je nach Anwendungsfall in unterschiedlichen Bauhöhen bereitzustellen sind. Um derartige unterschiedliche Bauhöhen auf einfache Art und Weise realisieren zu können, wurde gemäß EP-A-0 867 732 bereits vorgeschlagen, eine flexible Leiterkarte mit darauf befindlichen Sende- oder Empfangselementen ebenso wie eine Blendenplatte und eine optische Elemente beinhaltende Frontabdeckung jeweils in Form eines Endlosstreifens auszubilden, so dass hier in Abhängigkeit von der benötigten Bauhöhe jeweils ein entsprechend langer Streifen abgetrennt und in ein geeignetes Gehäuse eingebracht werden kann.

Nachteilig an dieser bekannten Anordnung ist die Tatsache, dass die Sende- bzw. Empfangselemente, die Blendenplatte und die optischen Elemente der Frontabdeckung jeweils relativ zueinander exakt ausgerichtet werden den müssen, was im Rahmen der Montage der optoelektronischen Anordnung einen aufwändigen Justageschritt bedingt. Bei ungenauer Justage kann nicht sichergestellt werden, dass eine optimale Lichtaussendung bzw. ein optimaler Lichtempfang vorliegt.

Die DE 44 38 798 A1 offenbart eine optoelektronische Anordnung gemäß dem Oberbegriff des Anspruchs 1. Diese Anordnung weist den Nachteil auf, dass umfangreiche bauliche Veränderungen vorgenommen werden müssen, um sie an die jeweiligen Anforderungen anzupassen, d.h. wenn bestimmte Beleuchtungs- und/oder Detektionsprofile erzeugt werden sollen.

Eine Aufgabe der vorliegenden Erfindung besteht darin, eine optoelektronische Anordnung bzw. ein Lichtgitter der genannten Art derart zu verbessern, dass unterschiedliche optoelektronische Anordnungen bzw. Sende- oder Empfangsleisten von Lichtgittern auf einfache Weise zu realisieren sind, ohne dass zu diesem Zweck bauliche Veränderungen vorgenommen werden müssen.

Erfindungsgemäß wird diese Aufgabe durch die Merkmale des Anspruchs 1 gelöst.

Zum einen wird also durch die erfindungsgemäße direkte Kopplung zwischen Lichtsender- oder Lichtempfängermodulen einerseits und den jeweils zugeordneten Tuben oder Linsenkörpern andererseits erreicht, dass diese optischen Komponenten bereits vor deren Montage in einem Gehäuse korrekt zueinander positioniert bzw. justiert sind, so dass aufgrund dieser optimalen Ausrichtung sichergestellt werden kann, dass eine optimale Lichtaussendung bzw. ein optimaler Lichtempfang erfolgt. Dabei können die Lichtsender- oder Lichtempfängermodule und die Tuben oder Linsenkörper in ihrem Kopplungsbereich derart komplementär zueinander ausgebildet werden, dass sie nur in einer bestimmten Relativposition, und zwar in einer solchen, die einer optimalen wechselseitigen Ausrichtung entspricht, miteinander verbunden werden können. So ergibt sich dann zwangsweise im Rahmen der Kopplung der Lichtsender- oder Lichtempfängermodule mit den zugeordneten Tuben oder Linsenkörpern eine optimale Justageposition, ohne dass irgendwelche Einstellarbeiten vorgenommen werden müssten, was im Rahmen der Montage einen erheblichen Zeitvorteil bedingt.

Zum anderen stellt die direkte Kopplung der Lichtsender- oder Lichtempfängermodule mit der flexiblen Leiterkarte sicher, dass die Gesamtanordnung in Form eines Endlosstreifens aufgebaut werden kann, welcher eine Vielzahl von Einheiten aus Lichtsender- oder Lichtempfängermodulen und den jeweils zugeordneten Tuben oder Linsenkörpern aufweist. Bei der Herstellung eines Lichtgitters kann dann von einem solchen Endlosstreifen ein Abschnitt abgetrennt werden, welcher die jeweils benötigte Anzahl der genannten Einheiten trägt, so dass dieser Abschnitt dann als Ganzes in einem Gehäuse montiert werden kann, wobei hier der abgetrennte Abschnitt als einheitliches Bauteil gehandhabt werden kann, so dass die Handhabung von einzelnen Lichtsender- oder Lichtempfängermodulen, von einzelnen Tuben oder Linsenkörpern oder von einer separaten Leiterkarte vollkommen entfällt. Auch hierdurch wird erfindungsgemäß die Montage einer optoelektronischen Anordnung bzw. eines Lichtgitters erheblich vereinfacht.

Die Lichtsender- oder Lichtempfängermodule sind mit den daran befestigten Tuben oder Linsenkörpern in einem Gehäuse gehalten, wobei der Abstand benachbarter Lichtsender- oder Lichtempfängermodule kleiner ist als die Länge des sich zwischen diesen benachbarten Lichtsender- oder Lichtempfängermodulen erstreckenden Abschnitts der flexiblen Leiterkarte. Dies bedeutet, dass es erfindungsgemäß im Unterschied zum Stand der Technik möglich wird, benachbarte Lichtsender- oder Lichtempfängermodule mit variablem Abstand zueinander zu montieren, so dass je nach Anwendungsfall eine unterschiedliche Anzahl von Lichtsender- oder Lichtempfängermodulen pro Längeneinheit vorgesehen werden können, ohne dass zu diesem Zweck an dem erläuterten streifenförmigen Abschnitt irgendwelche baulichen Änderungen vorgenommen werden müssten. Es genügt vielmehr, benachbarte Lichtsender- oder Lichtempfängermodule unter zunehmender Krümmung der zwischen ihnen angeordneten flexiblen Leiterkarte so nahe zueinander zu schieben, wie dies jeweils gewünscht ist. Auf die genannte Art und Weise lassen sich durch das genannte einfache Verschieben beispielsweise Abstände zwischen benachbarten Lichtsender- oder Lichtempfängermodulen von 20 mm, 30 mm oder 40 mm einstellen.

Der erläuterte streifenförmige Abschnitt, welcher aus flexibler Leiterkarte, Tuben oder Linsenkörpern und Lichtsender- oder Lichtempfängermodulen besteht, wird bevorzugt über die Tuben oder Linsenkörper innerhalb eines Gehäuses fixiert. Hierzu können die Tuben oder Linsenkörper Fortsätze aufweisen, die in komplementär dazu ausgebildete Nuten des Gehäuses einschiebbar sind. Diese Nuten erstrecken sich bevorzugt über die gesamte Länge des Gehäuses, so dass die Tuben oder Linsenkörper mit den daran angekoppelten Lichtsender- oder Lichtempfängermodulen praktisch beliebig entlang des Gehäuses verschoben werden können, bis sie ihre jeweils gewünschte Position einnehmen.

Vorteilhaft ist es, wenn die Tuben oder Linsenkörper an vorgesehenen Positionen im Gehäuse über jeweils eine Klemm-, Klebe-, Schnapp- oder Rastverbindung oder über zwischen benachbarten Tuben oder Linsenkörpern angeordnete Abstandselemente gehalten sind. Auf diese Art und Weise kann die Relativposition benachbarter Lichtsender- oder Lichtempfängermodule zueinander fixiert werden, so dass hier im Praxiseinsatz kein ungewolltes weiteres Verschieben der genannten Elemente entlang des Gehäuses stattfinden kann.

Im Gehäuse können die Tuben oder Linsenkörper mit daran befestigten Lichtsender- oder Lichtempfängermodulen entlang einer geraden, gekrümmten oder geknickten Linie angeordnet werden, wobei die Form dieser Linie durch die Gehäuseform bedingt ist. So kann je nach Anwendungsfall ein jeweils in der gewünschten Weise ausgeformtes Gehäuse eingesetzt werden, wobei die erfindungsgemäße Leiterkarte mit den daran befestigten Tuben oder Linsenkörpern und Lichtsender- oder Lichtempfängermodulen ohne jegliche Modifikation für die unterschiedlichen Gehäuseformen eingesetzt werden kann.

Vorteilhaft ist es, wenn die flexible Leiterkarte als handelsübliches Folienelement ausgebildet ist, da in diesem Fall eine Krümmung eines solchen Folienelements zur Einstellung des jeweils gewünschten Abstandes benachbarter Lichtsender- oder Lichtempfängermodule praktisch ohne Überwindung relevanter Gegenkräfte erzeugt werden kann.

Die Lichtsender- oder Lichtempfängermodule können jeweils in ein Kunststoffgehäuse eingegossen werden, welches zumindest im Bereich einer Lichtsende- bzw. Lichtempfangsstrecke transparent ausgebildet ist. Besonders vorteilhaft ist in diesem Zusammenhang der Einsatz eines "Clear Plastic Gehäuses".

Vorteilhaft ist es ferner, wenn die Lichtsender- oder Lichtempfängermodule über eine Schnapp-, Rast-, Klebe-, Schweiß- oder Warmnietverbindung mit den jeweils zugeordneten Tuben oder Linsenkörpern verbunden sind. Im Rahmen einer Schweißverbindung bietet sich insbesondere Ultraschall-Schweißen an. Alle genannten Verbindungsarten stellen sicher, dass die Lichtsender- oder Lichtempfängermodule in einer exakt justierten Relativposition mit den Tuben oder Linsenkörpern verbunden werden können.

Die Kopplung zwischen Lichtsender- oder Lichtempfängermodulen mit der erfindungsgemäßen flexiblen Leiterkarte erfolgt bevorzugt über Löten.

Besonders vorteilhaft ist es, wenn jedem Tubus eine Linse zugeordnet ist, welche insbesondere an diesem direkt befestigt oder integral mit diesem ausgebildet ist. Auf diese Weise können zusätzliche Justagearbeiten zwischen Tubus und Linse eingespart werden.

Neben der erläuterten optoelektronischen Anordnung betrifft die Erfindung auch ein Lichtgitter mit einer Sende- und einer Empfangsleiste, welche jeweils als optoelektronische Anordnung gemäß den vorstehenden Erläuterungen ausgebildet sind. Bei einem solchen Lichtgitter lässt sich die Erfindung besonders wirtschaftlich einsetzen.

Weitere bevorzugte Ausführungsformen der Erfindung sind in den Unteransprüchen beschrieben.

Die Erfindung wird nachfolgend anhand eines Ausführungsbeispiels unter Bezugnahme auf die Zeichnungen erläutert; in diesen zeigen:
- Fig. 1: eine Seitenansicht einer erfindungsgemäßen optoelektronischen Anordnung gemäß einer ersten Ausführungsform ohne Leiterkarte,
- Fig. 2: eine Seitenansicht mehrerer Anordnungen gemäß Fig. 1, welche über eine flexible Leiterkarte miteinander gekoppelt sind, und
- Fig. 3: einen Schnitt durch das Gehäuse einer Sende- oder Empfangsleiste eines Lichtgitters, in welchem eine optoelektronische Anordnung gemäß einer zweiten Ausführungsform der Erfindung aufgenommen ist.

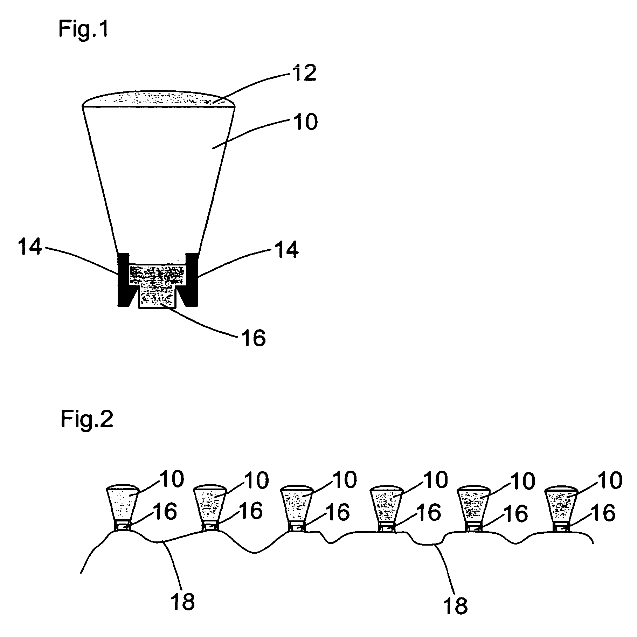

Gemäß Fig. 1 ist ein Tubus 10 an seiner Oberseite fest mit einer Linse 12 verbunden, wobei zwischen Tubus 10 und Linse 12 beispielsweise eine Klebeverbindung ausgebildet sein kann. An seiner der Linse 12 abgewandten Unterseite sind an den Tubus zwei flexible Haken 14 angeformt, welche jeweils eine Hinterschneidung aufweisen, wobei die beiden Hinterschneidungen einander zugewandt sind.

Zwischen den Hinterschneidungen der Haken 14 und der Unterseite des Tubus 10 ist ein transparentes Kunststoffgehäuse 16 gehalten, in welches ein Lichtsender- oder Lichtempfängermodul eingegossen ist.

Bei einer Kopplung von Kunststoffgehäuse 16 und Tubus 10 wird das Kunststoffgehäuse 16 einfach von unten unter Aufspreizung der Haken 14 in Richtung des Tubus 10 geschoben, bis die Oberseite des Kunststoffgehäuses 16 an der Unterseite des Tubus 10 anliegt. In dieser Position bewegen sich die Haken 14 aufgrund der ihnen eigenen Rückstellkräfte in die in Fig. 1 dargestellte Position, in der sie das Kunststoffgehäuse 16 in einer fest definierten Relativposition zum Tubus 10 halten. Bei der Kopplung von Kunststoffgehäuse 16 und Tubus 10 sind somit keinerlei Justagearbeiten nötig. Vielmehr ist es ausreichend, das Kunststoffgehäuse 16 einfach in Richtung des Tubus 10 zu drücken, bis die Haken 14 in ihre in Fig. 1 dargestellte Fixierposition schnappen. Anschließend ist dann automatisch eine optimale Justage zwischen Tubus 10 und Kunststoffgehäuse 16 bzw. dem darin angeordneten Lichtsender- oder Lichtempfängermodul gegeben. Eine optimale optische Ausrichtung zwischen Linse 12 und Tubus 10 wurde bereits beim Verkleben dieser beiden Bauteile erzeugt, so dass auch diesbezüglich kein weiterer Aufwand betrieben werden muss.

Fig. 2 zeigt eine Seitenansicht mehrerer Anordnungen gemäß Fig. 1, wobei hier die jeweils Kontakte tragende Unterseite der Kunststoffgehäuse 16 mit einer folienartig ausgebildeten flexiblen Leiterkarte 18 verlötet ist. Durch die Leiterkarte 18 werden somit alle Anordnungen 10, 16 reihenförmig und unverlierbar miteinander verbunden. Diese Verbindung erstreckt sich dabei sowohl auf die mechanische als auch auf die elektrische Kopplung der einzelnen Anordnungen 10, 16, so dass alle in den Kunststoffgehäusen 16 gehaltenen Lichtsender- oder Lichtempfängermodule über die entlang der Leiterkarte 18 verlaufenden Leiter angesteuert bzw. abgefragt werden können. Es ist somit zur elektrischen Ansteuerung bzw. Abfrage lediglich nötig, ein Ende der Leiterkarte 18 mit einer entsprechenden Steuer- und Auswerteeinheit zu verbinden. Weitere Leitungen müssen zu diesem Zweck nicht verlegt werden.

Fig. 2 verdeutlicht besonders anschaulich, dass die Leiterkarte 18 flexibel ausgebildet ist, da sie zwischen benachbarten Anordnungen 10, 16 keinen linearen, sondern einen statistisch gekrümmten Verlauf aufweist. Aufgrund dieser Flexibilität der Leiterkarte 18 ist es möglich, benachbarte Anordnungen 10, 16 mit einem noch geringeren Abstand zueinander in einem Gehäuse zu montieren, als dies in Fig. 2 dargestellt ist. Ebenso könnte der genannte Abstand aber auch vergrößert werden bis zu einem Maß, bei dem die Leiterkarte 18 zwischen benachbarten Anordnungen 10, 16 gestreckt bzw. linear verläuft.

Erfindungsgemäß wird es also möglich, beispielsweise alle für eine Sende- oder Empfangsleiste eines Lichtgitters benötigten Anordnungen 10, 16 als einheitliches, flexibles Bauteil handzuhaben, welches einfach in ein Gehäuse der Sende- bzw. Empfangsleiste eingeschoben werden kann und dort mit dem jeweils gewünschten wechselseitigen Abstand benachbarter Anordnungen 10, 16 fixierbar ist.

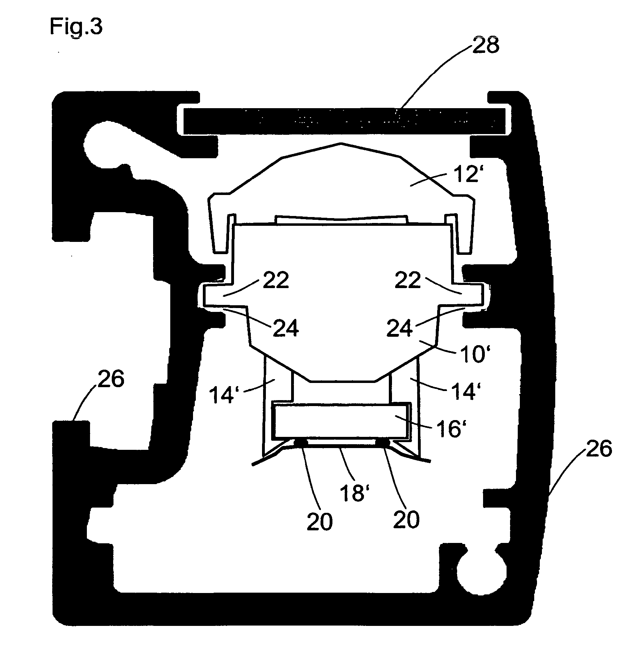

Fig. 3 zeigt eine weitere, aus Tubus 10', Linse 12', Haken 14' und Kunststoffgehäuse 16' bestehende Anordnung, deren Aufbau im Wesentlichen dem Aufbau gemäß Fig. 1 entspricht. Lediglich die äußeren Konturen von Tubus 10', Linse 12' und Kunststoffgehäuse 16' unterscheiden sich von denjenigen gemäß Fig. 1. Die Verbindung der einzelnen Bauteile 10', 12', 14' und 16' erfolgt jedoch auf exakt die gleiche Weise, wie in Verbindung mit Fig. 1 bereits erläutert.

An der Unterseite des Kunststoffgehäuses 16' sind zwei Lötstellen 20 erkennbar, über welche an der Unterseite des Gehäuses 16' befindliche Kontakte mit einer flexiblen Leiterkarte 18' elektrisch und mechanisch gekoppelt sind.

Im Unterschied zu der Anordnung gemäß Fig. 1 besitzt der Tubus 10' gemäß Fig. 3 seitlich zwei nach außen ragende Fortsätze 22, welche sich voneinander weg erstrecken.

Die beiden Fortsätze 22 greifen in zwei Nuten 24 ein, welche an den einander gegenüberliegenden Innenseite eines Gehäuses 26 ausgebildet sind.

Durch dieses Eingreifen wird der Tubus 10' mit den daran befestigten weiteren Teilen an einer definierten Position im Gehäuse 26 gehalten.

Das Gehäuse 26 ist als lang gestrecktes Profilelement ausgebildet, so dass sich die Nuten 24 über dessen gesamte Länge erstrecken. Auf diese Weise können in die Nuten 24 mehrere, über die flexible Leiterkarte 18' miteinander verbundene Tuben 10' reihenförmig im Gehäuse 26 angeordnet werden. Dabei sind die Tuben 10' entlang der Nuten 24 verschiebbar, bevor sie endgültig im Gehäuse 26 fixiert werden. Insbesondere können benachbarte Tuben 10' aufgrund der Flexibilität der Leiterkarte 18' auch mit einem jeweils gewünschten wechselseitigen Abstand zueinander im Gehäuse 26 montiert werden.

An seiner Oberseite ist das Gehäuse 26 durch eine transparente Frontscheibe 28 abgeschlossen, durch die Licht aus dem Gehäuse aus- oder in das Gehäuse eintreten kann.

### Bezugszeichenliste

- 10, 10': Tubus
- 12, 12': Linse
- 14, 14': Haken
- 16, 16': Kunststoffgehäuse
- 18, 18': Leiterkarte
- 20: Lötstellen
- 22: Fortsätze
- 24: Nuten
- 26: Gehäuse
- 28: Frontscheibe

## Patentansprüche

1. Optoelektronische Anordnung mit einer Mehrzahl von Lichtsender-oder Lichtempfängermodulen, die mittels einer Leiterkarte (18, 18') elektrisch miteinander verbunden und jeweils einem Tubus oder Linsenkörper (10, 10') zugeordnet sind, wobei die Lichtsender- oder Lichtempfängermodule direkt an den jeweils zugeordneten Tuben oder Linsenkörpern (10, 10') und die Leiterkarte (18, 18') direkt an den Lichtsender- oder Lichtempfängermodulen befestigt sind, **dadurch gekennzeichnet,**
**dass** die Leiterkarte (18, 18') flexibel ist und dass die Lichtsender-oder Lichtempfängermodule mit den daran befestigten Tuben oder Linsenkörpern (10, 10') in einem Gehäuse (26) gehalten sind, wobei der Abstand benachbarter Lichtsender-oder Lichtempfängermodule kleiner ist als die Länge des sich zwischen diesen benachbarten Lichtsender- oder Lichtempfängermödulen erstreckenden Abschnitts der flexiblen Leiterkarte (18, 18').

2. Optoelektronische Anordnung nach Anspruch 1,
**dadurch gekennzeichnet,**
**dass** die Tuben oder Linsenkörper (10, 10') am Gehäuse (26) fixiert sind.

3. Optoelektronische Anordnung nach Anspruch 2,
**dadurch gekennzeichnet,**
**dass** die Tuben oder Linsenkörper (10') Fortsätze (22) aufweisen, die in komplementär dazu ausgebildete Nuten (24) des Gehäuses (26) einschiebbar sind.

4. Optoelektronische Anordnung nach einem der Ansprüche 2 oder 3, **dadurch gekennzeichnet,**
**dass** die Tuben oder Linsenkörper (10, 10') an vorgesehenen Positionen im Gehäuse (26) über jeweils eine Klemm-, Klebe-, Schnapp- oder Rastverbindung oder über zwischen benachbarten Tuben oder Linsenkörpern (10, 10') angeordnete Abstandselemente gehalten sind.

5. Optoelektronische Anordnung nach einem der Ansprüche 2 bis 4, **dadurch gekennzeichnet,**
**dass** die Tuben oder Linsenkörper (10, 10') im Gehäuse (26) entlang einer geraden, gekrümmten oder geknickten Linie angeordnet sind.

6. Optoelektronische Anordnung nach einem der vorhergehenden Ansprüche,
**dadurch gekennzeichnet,**
**dass** die flexible Leiterkarte (18, 18') als Folienelement ausgebildet ist.

7. Optoelektronische Anordnung nach einem der vorhergehenden Ansprüche,
**dadurch gekennzeichnet,**
**dass** die Lichtsender- oder Lichtempfängermodule jeweils in ein Kunststoffgehäuse (16, 16') eingegossen sind, welches zumindest im Bereich einer Lichtsende- bzw. Lichtempfangsstrecke transparent ausgebildet ist.

8. Optoelektronische Anordnung nach einem der vorhergehenden Ansprüche,
**dadurch gekennzeichnet,**
**dass** die Lichtsender- oder Lichtempfängermodule über eine Schnapp-, Rast-, Klebe-, Schweiß- oder Warmnietverbindung mit den jeweils zugeordneten Tuben oder Linsenkörpern (10, 10') verbunden sind.

9. Optoelektronische Anordnung nach einem der vorhergehenden Ansprüche,
**dadurch gekennzeichnet,**
**dass** die Lichtsender- oder Lichtempfängermodule mit der Leiterkarte (18, 18') verlötet sind.

10. Optoelektronische Anordnung nach einem der vorhergehenden Ansprüche,
**dadurch gekennzeichnet,**
**dass** jedem Tubus (10, 10') eine Linse (12, 12') zugeordnet ist, welche insbesondere an diesem direkt befestigt oder integral mit diesem ausgebildet ist.

11. Lichtgitter mit einer Sende- und einer Empfangsleiste, welche jeweils als optoelektronische Anordnung gemäß einem der vorhergehenden Ansprüche ausgebildet sind.

## Claims

1. An optoelectronic arrangement having a plurality of light transmitter modules or light receiver modules which are electrically connected to one another by means of a circuit board (18, 18') and are each associated with a tube or with a lens body (10, 10'), wherein the light transmitter modules or light receiver modules are directly fastened to the respective associated tubes or lens bodies (10, 10') and the circuit board (18, 18') is directly fastened to the light transmitter modules or light receiver modules,
**characterised in that**
the circuit board (18, 18') is flexible; and **in that** the light transmitter modules or light receiver modules with the tubes or lens bodies (10, 10') fastened thereto are held in a housing (26), with the spacing of adjacent light transmitter modules or light receiver modules being smaller than the length of the section of the flexible circuit board (18, 18') extending between these adjacent light transmitter modules or light receiver modules.

2. An optoelectronic arrangement in accordance with claim 1, **characterised in that**
the tubes or lens bodies (10, 10') are fixed at the housing (26).

3. An optoelectronic arrangement in accordance with claim 2, **characterised in that**
the tubes or lens bodies (10') have prolongations (22) which can be pushed into grooves (24) of the housing (26) formed complementary to said prolongations.

4. An optoelectronic arrangement in accordance with one of the claims 2 or 3,
**characterised in that**
the tubes or lens bodies (10, 10') are held at designated positions in the housing (26) respectively via a clamping connection, an adhesive connection, a snap-in connection or a latch connection or via spacer elements arranged between adjacent tubes or lens bodies (10, 10').

5. An optoelectronic arrangement in accordance with any one of the claims 2 to 4,
**characterised in that**
the tubes or lens bodies (10, 10') are arranged along a straight line, a curved line or a kinked line in the housing (26).

6. An optoelectronic arrangement in accordance with any one of the preceding claims,
**characterised in that**
the flexible circuit board (18, 18') is formed as a film element.

7. An optoelectronic arrangement in accordance with any one of the preceding claims,
**characterised in that**
the light transmitter modules or light receiver modules are each moulded into a plastic housing (16, 16') which is formed as transparent at least in the region of a light transmission path or light reception path.

8. An optoelectronic arrangement in accordance with any one of the preceding claims,
**characterised in that**
the light transmitter modules or light receiver modules are connected to the respective associated tubes or lens bodies (10, 10') via a snap-in connection, a latch connection, an adhesive connection, a weld connection or a hot rivet connection.

9. An optoelectronic arrangement in accordance with any one of the preceding claims,
**characterised in that**
the light transmitter modules or light receiver modules are soldered to the circuit board (18, 18').

10. An optoelectronic arrangement in accordance with any one of the preceding claims,
**characterised in that**
a lens (12, 12') is associated with each tube (10, 10') and is in particular fastened directly thereto or formed integrally therewith.

11. A light grid having a transmission strip and a reception strip which are each designed as an optoelectronic arrangement in accordance with any one of the preceding claims.

## Revendications

1. Système optoélectronique comprenant une pluralité de modules émetteurs de lumière ou de modules récepteurs de lumière, qui sont reliés électriquement les uns aux autres au moyen d'une carte à circuits (18, 18') et qui sont respectivement associés à un tube ou à un corps de lentille (10, 10'), les modules émetteurs de lumière ou les modules récepteurs de lumière étant fixés directement aux tubes ou aux corps de lentilles (10, 10') respectivement associés et la carte à circuits (18, 18') étant fixée directement aux modules émetteurs de lumière ou aux modules récepteurs de lumière,
**caractérisé en ce que**
la carte à circuits (18, 18') est flexible, et **en ce que** les modules émetteurs de lumière ou les modules récepteurs de lumière avec les tubes ou les corps de lentilles (10, 10') fixés sur ces modules sont tenus dans un boîtier (26), et la distance de modules émetteurs de lumière ou de modules récepteurs de lumière voisins est plus petite que la longueur du tronçon de la carte à circuits flexibles (18, 18') qui s'étend entre ces modules émetteurs de lumière ou ces modules récepteurs de lumière voisin.

2. Système optoélectronique selon la revendication 1,
**caractérisé en ce que** les tubes ou les corps de lentilles (10, 10') sont fixés sur le boîtier (26).

3. Système optoélectronique selon la revendication 2,
**caractérisé en ce que** les tubes ou les corps de lentilles (10') comportent des prolongements (22), lesquels sont susceptibles d'être enfilés dans des gorges (24) réalisées de manière complémentaire à ces prolongements dans le boîtier (26).

4. Système optoélectronique selon l'une des revendications 2 ou 3, **caractérisé en ce que** les tubes ou les corps de lentilles (10, 10') sont tenus à des positions prédéfinies dans le boîtier (26) au moyen d'une liaison par coincement, par collage, par encliquetage ou par enclenchement, ou bien au moyen d'éléments d'écartement agencés entre des tubes ou des corps de lentilles (10, 10') voisins.

5. Système optoélectronique selon l'une des revendications 2 à 4, **caractérisé en ce que** les tubes ou les corps de lentilles (10, 10') sont agencés dans le boîtier (26) le long d'une ligne droite, d'une ligne courbe ou d'une ligne brisée.

6. Système optoélectronique selon l'une des revendications précédentes,
**caractérisé en ce que** la carte à circuits flexibles (18, 18') est réalisée sous forme d'élément en film.

7. Système optoélectronique selon l'une des revendications précédentes,
**caractérisé en ce que** les modules émetteurs de lumière ou les modules récepteurs de lumière sont respectivement noyés dans un boîtier en matière plastique (16, 16') qui est réalisé transparent au moins dans la région d'un trajet émetteur de lumière ou d'un trajet récepteur de lumière.

8. Système optoélectronique selon l'une des revendications précédentes,
**caractérisé en ce que** les modules émetteurs de lumière ou les modules récepteurs de lumière sont reliés aux tubes ou aux corps de lentilles (10, 10') respectivement associés via une liaison par enclenchement, par encliquetage, par collage, par soudure ou par rivetage à chaud.

9. Système optoélectronique selon l'une des revendications précédentes,
**caractérisé en ce que** les modules émetteurs de lumière ou les modules récepteurs de lumière sont brasés sur la carte à circuits (18, 18').

10. Système optoélectronique selon l'une des revendications précédentes,
**caractérisé en ce qu'**une lentille (12, 12') est associée à chaque tube (10, 10'), laquelle est en particulier fixée directement sur celui-ci ou réalisée de manière intégrale avec celui-ci.

11. Barrière lumineuse comprenant une réglette émettrice et une réglette réceptrice, lesquelles sont respectivement réalisées sous forme de système optoélectronique selon l'une des revendications précédentes.
